# EUROPEAN PATENT SPECIFICATION

(11) **EP 4 375 555 B1**
(45) Date of publication and mention of the grant of the patent: **17.09.2025**
(21) Application number: 22209348.6
(22) Date of filing: 24.11.2022
(51) Int. Cl.: F16L 47/02, C25B 9/19, C25B 15/08

(54) **CONNECTING TUBE, ELECTROLYSIS SYSTEM AND CONNECTION METHOD**
VERBINDUNGSROHR, ELEKTROLYSESYSTEM UND VERBINDUNGSVERFAHREN
TUBE DE RACCORDEMENT, SYSTÈME D'ÉLECTROLYSE ET PROCÉDÉ DE RACCORDEMENT

(43) Date of publication of application: 29.05.2024
(73) Proprietor: thyssenkrupp nucera AG & Co. KGaA, 44269 Dortmund (DE)
(72) Inventor: WALDECK, Sebastian, 58675 Hemer (DE); HILTROP, Dennis, 44139 Dortmund (DE)
(74) Representative: thyssenkrupp Intellectual Property GmbH

(56) References cited:
- WO-A1-00/36325
- NO-B- 135 332
- US-A- 4 090 899
- US-A1- 2001 035 093
- US-A1- 2021 115 574

## Description

### Technical Field

The present invention relates to a connecting tube for connecting a cell nozzle being in fluid communication with a chamber of an electrolysis cell to an outlet header. The present invention relates to an electrolysis system for electrolytic treatment of liquids. Moreover, the present invention relates to a method for connecting a cell nozzle being in fluid communication with a chamber of an electrolysis cell to an outlet header.

### Background

DE 10 2017 217 361 A1 discloses an electrolysis device for electrolytic treatment of liquids such as chlor-alkali electrolysis or alkaline water electrolysis. The electrolysis device includes an anode chamber and a cathode chamber, which are separated from one another via an ion exchange membrane. A first liquid as e.g. brine in chlor-alkali electrolysis is fed through an external feed pipe and nozzle into the anode chamber through an internal feed pipe, and the treated liquid as well as the gas produced at the anode thereafter exit through a discharge pipe to an outlet pipe. Likewise, a second liquid such as diluted caustic soda solution is dispersed across the width of the cathode chamber by a solution feed pipe, and the treated liquid as well as the gas produced at the cathode thereafter exit through a discharge pipe to another outlet header.

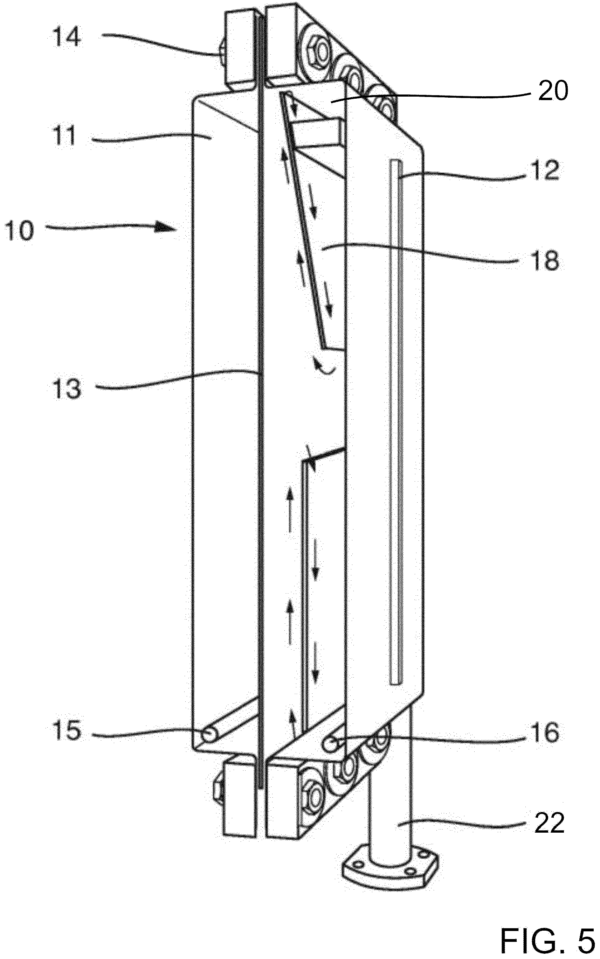

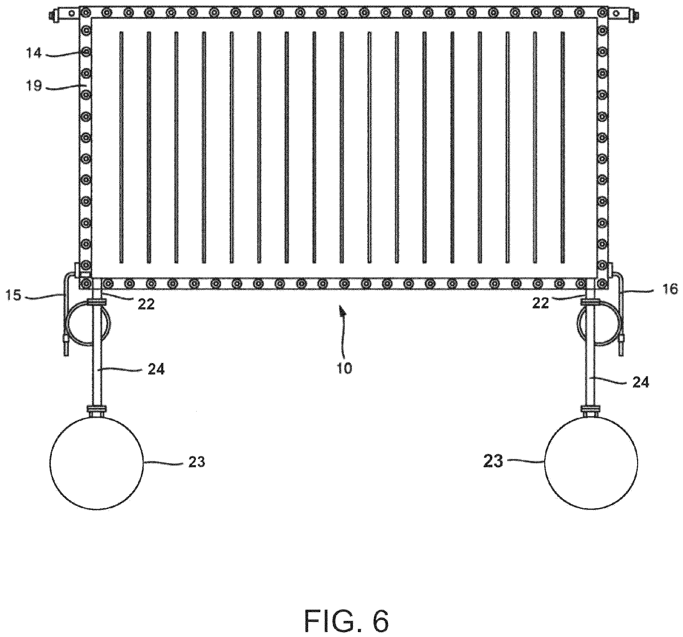

One example of an existing electrolysis device is illustrated in Figures 5 and 6. The electrolysis device may include a number of electrolysis cells 10 aligned in parallel to each other. Each electrolysis cell 10 may comprise one housing having two half-shells, namely a cathode half-shell 11 and an anode half-shell 12, which may be each provided at their circumference with flange-like rim portions 19 between which a membrane 13 is clamped by means of seals. Said membrane 13 may form a dividing wall between the cathode half-shell 11 comprising the cathode chamber or catholyte chamber, and the anode half-shell 12 comprising the anode chamber or anolyte chamber. The cathode half-shell 11 and the anode half-shell 12 may be connected to one another at their circumference, in the region of their flange-like rim portions 19, via screws 14, which may be oriented in the transverse direction, to form a closed electrolysis cell 10.

In the lower region, in each of the two half-shells 11, 12, there is disposed one inlet distributor tube 15, 16 for feeding electrolyte solution, and one cell nozzle 22, 22 through which consumed electrolyte may be discharged. Within the half-shells 11, 12 baffle plates 18 may be disposed in order to guide the flow of electrolyte during operation of the cell 10. The consumed electrolytes from the respective half-shells 11, 12 may be collected into a respective outlet header 23 via outlet hoses 24 connected to the respective cell nozzle 22.

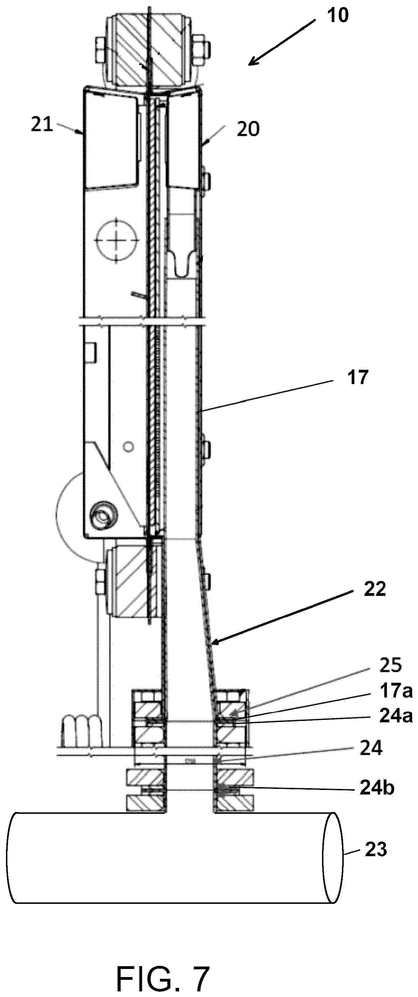

Figure 7 shows one example of an existing design of discharge system for electrolysis cells. In this figure, a chlorine collector outlet channel 20 for collecting depleted brine and chlorine and a hydrogen collector outlet channel 21 for collecting concentrated caustic soda and hydrogen can be seen at the top of the cell 10. The cell nozzle 22 is connected to the outlet channel 20 via a discharge pipe 17 introduced into the cell nozzle 22 from below and extending within the anode chamber up to the outlet channel 20. The discharge pipe 17 is disposed within the cell 10 so as to discharge liquid and product gas from the outlet channel 20 through the cell nozzle 22 to an outlet header 23.

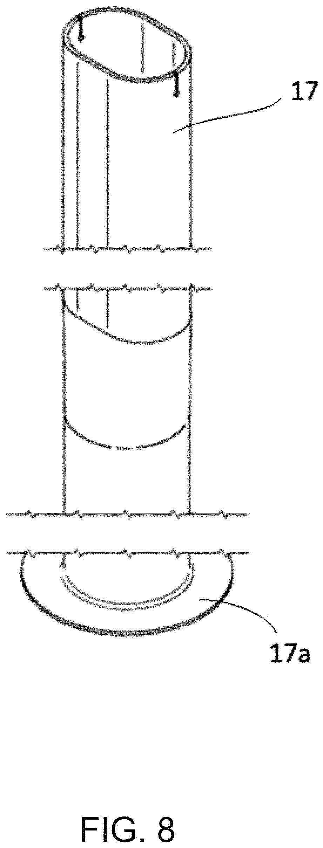

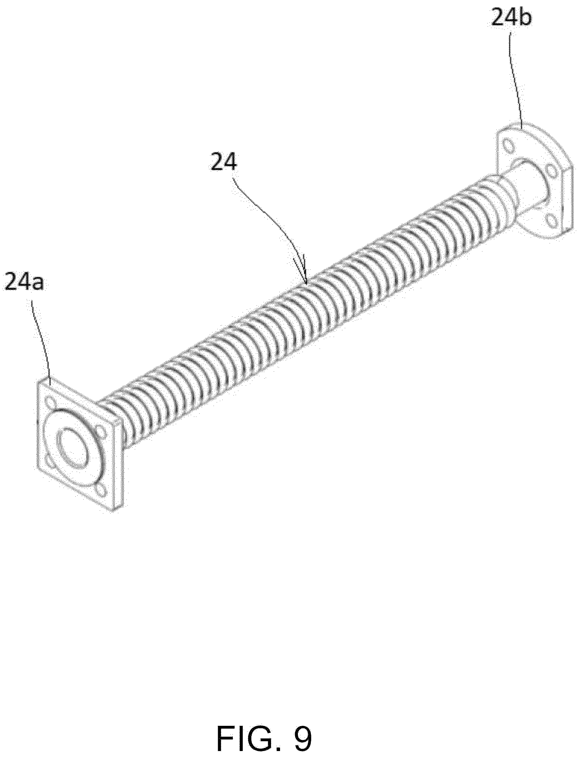

The discharge pipe 17 and the cell nozzle 22 are thereafter connected to an outlet hose 24 via a flange connection 25. The flange connection 25 is used on both the cell side and the header side. One example of the discharge pipe 17 is shown in Figure 8. It can be seen that the discharge pipe 17 with a flange 17a is inserted into the cell nozzle 22. One example of outlet hose 24 with flanges 24a, 24b at both ends is shown in Figure 9. In the prior art design, the outlet hose 24 and the discharge pipe 17 are installed as individual components, which are connected via the flange connection 25.

Such a flange connection 25 forms a reliable connection between cell nozzle 22, discharge pipe 17 and outlet hose 24, but at the same time leads to high production costs as well as high assembly costs. A plurality of bolts and nuts must be properly tightened along the circumference with the flanges 17a, 24a interposed therebetween, with even forces, otherwise sufficient sealing functionality may not be obtained. This requires experience and time. In addition, poor accessibility to the bolts and nuts due to the close arrangement of the adjacent hoses further increases assembly time.

From US 4 090 899 A a thermoplastic welding method for joining self-supporting structures made of thermoplastics is known, wherein said structures are assembled to form an area of mutual overlap, heat is generated in said area to produce a welding zone with an elevated temperature and containing said thermoplastics in a plastic state for mutual coalescence, and wherein an expanding agent is provided in the welding zone to generate a gas pressure for promoting coalescence of the weld. The welding method is suitable for welding tubes and other pipeline elements, such as fittings or sleeves, of thermoplastics.

US 2001/0035093 A1 describes a gas permeable membrane apparatus having an inlet-end and an outlet-end connector portion, in which cylindrical couplings are inserted. The cylindrical couplings have line connector portions for connection to a liquid inlet or outlet line and a tube connector portion for connection to a tube bundle. A sleeve sheathing the end of the tube bundle is inserted into tube connector portion and joined in liquid-tight fashion to the cylindrical coupling by means of welding, fusion, screw coupling, or the like.

NO 135332 B discloses a socket connection between plastic drain pipes, wherein one of the pipe parts is designed with a socket end piece, in which the other pipe end is inserted. To achieve a tight connection an O-ring packing is arranged in a groove of the socket. In addition, the seal can be achieved by an adhesive layer gluing the pipe parts together.

It is an object of the present invention to overcome the disadvantages of the state of the art, in particular to provide an arrangement and method for connecting a cell nozzle to an outlet header, which is easier to assemble whilst maintaining a tight sealing therebetween.

### Summary

The object is solved by the subject matter of independent claims 1, 12 and 14.

According to an aspect of the present invention, a connecting tube for connecting a cell nozzle being in fluid communication with a chamber of an electrolysis cell to an outlet header is provided. The connecting tube comprises: a tube body; an outer sleeve connected to an end of the tube body, an inner sleeve arranged inside the outer sleeve so as to define an annular gap between the inner sleeve and outer sleeve for receiving the cell nozzle, and a seal subsisting between the outer and inner sleeves and located between the tube body end and the annular gap. The seal is formed by an inextricable bond of the outer sleeve to the inner sleeve.

The connecting tube may be seen as a combined (discharge) pipe-hose arrangement. With this arrangement, the above mentioned flange connection is eliminated. The inventive solution provides a single end piece having both functionalities as the discharge pipe and as the outlet hose. Proper sealing is ensured by means of the seal provided between the outer and inner sleeves and on the tube body side of the annular gap. The outer sleeve may be pushed over the cell nozzle so that the cell nozzle is inserted into the annular gap between the outer sleeve and the inner sleeve. The end of the annular gap provides an abutment surface for the cell nozzle that at the same time ensures proper positioning of the inner sleeve end within the electrolysis cell.

A clamping means may be used to ensure mechanically the connected state of the connecting tube and the cell nozzle. However, since leak tightness is primarily ensured already by the seal between the inner and outer sleeve the clamping force can be reduced compared to the prior flange connection. In particular, a single screw may suffice to provide the clamping force without incurring excessive assembly costs. The inextricable bond between the outer sleeve and the inner sleeve may preferably be a substance-to-substance bond between the materials of the inner sleeve and the outer sleeve.

The outer sleeve is made of a flexible plastic material. The plastic outer sleeve may be deformed in order to fit onto the cell nozzle and may thus ensure a sealing force on the outer surface of the cell nozzle even without an additional clamping means being installed. A good connected state of the connecting tube and the cell nozzle may be achieved.

It is in particular preferable that the outer sleeve is made of polytetrafluoroethylene (PTFE). This material has the ability to withstand the harsh chemical conditions in chlor-alkali and water electrolysis and shows good plastic welding properties for the outer sleeve to be welded to the inner sleeve by heat joining.

It is preferable that the seal is formed by portions of the outer and inner sleeves that are joined by a plastic welded connection. This type connection provides a reliable seal between the outer sleeve and inner sleeve with relatively lower costs. Alternatively or in addition, it is imaginable to join the outer and inner sleeves by e.g. gluing.

It is preferable that a first portion of the outer sleeve that defines the annular gap is larger in diameter than a second portion of the outer sleeve that is fixed to the inner sleeve. This allows to define the annular gap whilst the diameter of the inner sleeve remains constant, resulting in further reduced costs of the connecting tube.

It is preferable that the outer sleeve has a tapered transition between the first and second portions. This simplifies mounting of the outer sleeve on the cell nozzle and relieves stress in the transition when applying a clamping force to the outer sleeve with a clamping means.

It is preferable that the inner sleeve protrudes from the outer sleeve in a direction away from the tube body. This allows the inner sleeve to be inserted to a sufficient depth into the electrolysis cell.

It is preferable that the inner sleeve is made of a plastic material, in particular PTFE. This allows for a particularly good thermoplastically welded connection between the inner and the outer sleeve. In particular, it is preferred if the inner and the outer sleeve are made from the same plastic material. However, it can also be imagined to make the inner sleeve from e.g. metal or fibre-reinforced plastic.

It is preferable that the tube body is a flexible tube. This improves the freedom in arrangement of the connecting tube. The tube body may also be a corrugated hose.

It is preferable that the outer sleeve and the tube body are formed as a single piece. Such a unitary part may be manufactured at low cost without causing any fluid leakage problems.

The present invention is also directed to an electrolysis system for electrolytic treatment of liquids. The system comprises an electrolysis device that has an anode chamber, a cathode chamber, and an ion exchange membrane separating the anode chamber from the cathode chamber, cell nozzles being assigned to the respective chambers. The system further comprises one or more headers. The system further comprises a connecting tube as mentioned above. Two or more connecting tubes may be provided for the respective cell nozzles. The connecting tube connects one of the cell nozzles to one of the headers with the cell nozzle being inserted into the annular gap defined between the outer and inner sleeves of the connecting tube. A clamping force is applied to the outer sleeve by a clamping means in order to clamp the outer sleeve to the cell nozzle.

It is preferable that the clamping means includes a screw clamp, which comprises a band, and a screw configured to tighten the band. Such clamps are widely distributed on the market and are available at low cost. Other clamps, such as spring clamps and wire clamps, are also applicable.

The present invention is also directed to a method for connecting a cell nozzle communicated with a chamber of an electrolysis device to a header. The method comprises: providing a connecting tube as mentioned above; inserting the cell nozzle into the annular gap defined between the outer and inner sleeves of the connecting tube; and applying a clamping force to the outer sleeve using a clamping means.

A variety of additional inventive aspects will be set forth in the description that follows. The inventive aspects can relate to individual features and to combinations of features. It is to be understood that the following detailed description are exemplary and explanatory only and are not restrictive of the broad inventive concepts within the scope of the appended claims.

### Brief Description of the Drawings

Figure 1 is a perspective view of a connecting tube according to a first embodiment of the present invention, which is to be mounted on a cell nozzle of an electrolysis cell;
Figure 2 is a partially enlarged cross-sectional view of the connecting tube of Figure 1 in state mounted to a cell nozzle;
Figure 3 is a perspective view of a chamber of an electrolysis cell that is connected to the connecting tube of Figure 1;
Figure 4 is a perspective view of a chamber of an electrolysis cell that is connected to a connecting tube according to a second embodiment of the invention;
Figure 5 is a perspective view showing a cross-section of an electrolysis cell;
Figure 6 is a front view showing the electrolysis cell of Figure 5;
Figure 7 is a cross-sectional view of an electrolysis cell with a discharge system according to the state of art;
Figure 8 is a perspective view showing a discharge pipe according to the state of art; and
Figure 9 is a perspective view showing an outlet hose according to the state of art.

### Detailed Description

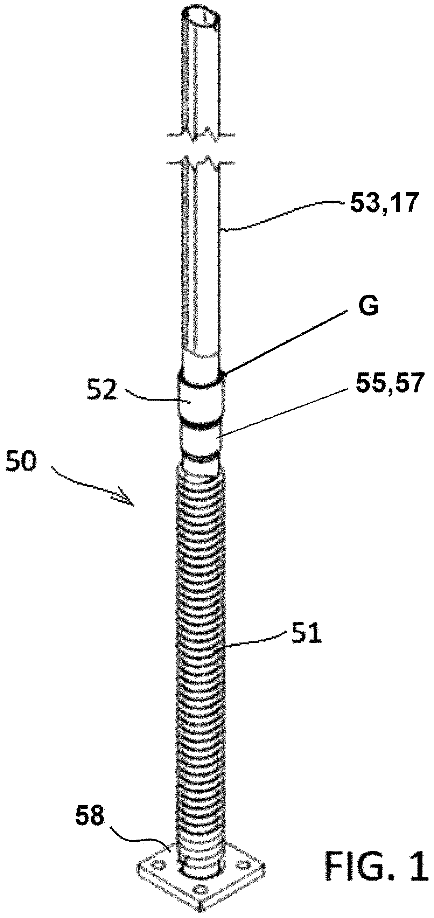

Figure 1 shows a connecting tube according to an embodiment of the present invention, the connecting tube being provided for assembly with a cell nozzle of an electrolysis cell. The inventive concept may be applicable to any type of electrolysis cells and systems for electrolyte treatment with liquid electrolyte and product gases. One example of electrolysis cell is shown in Figures 5 to 7. However, it should be noted that in the present invention, instead of the outlet hose 24 and the discharge pipe 17, a connection tube 50 as shown in Figure 1 is used. The description of other structures in the electrolysis cell and system described above is incorporated into the description of the present invention to avoid repetition.

The connection tube 50 is designed to connect the cell nozzle 22 which is in fluid communication with a chamber 11, 12 of the cell 10 to an outlet header 23 (cf. Fig. 6 and 7) serving as a collection and discharge line. The connection tube 50 includes a tube body 51, an outer sleeve 52 and an inner sleeve 53. An annular gap G is defined between the outer sleeve 52 and the inner sleeve 53.

The tube body 51 is a part that primarily extends between a header, and the outer sleeve 52. The tube body 51 may be longer than the distance between an electrolysis cell and the header (e.g., electrolysis cell 10 and header 23). The tube body 51 may be a flexible hose in order to increase the freedom in arrangement of the connecting tube 50. For example, the tube body 51 may comprise primarily a corrugated or bellows hose. The tube body 51 may have chemical resistant to the fluids and gases being treated within the electrolysis cell. Most preferably, the tube body 51 is made of polytetrafluoroethylene (PTFE). The tube body 51 may comprise reinforced with fibres or the like. The tube body 51 may also be made of other synthetic plastic materials such as polyethylene, polyvinyl chloride or polypropylene.

The outer sleeve 52 is connected to an end of the tube body 51. The outer sleeve 52 is made of flexible plastic material, e.g. a thermoplastic resin such as polyethylene, polyvinyl chloride, polypropylene. Most preferably, the outer sleeve 52 is made of polytetrafluoroethylene (PTFE). The plastic outer sleeve may be deformed to fit it onto the cell nozzle 22 and to ensure that the clamping force from a clamping means 54 is transmitted to the cell nozzle 22 arranged inside the annular gap G. A good connected state of the connecting tube and the cell nozzle may thus be achieved.

The outer sleeve 52 may be tubular. The outer sleeve 52 may have a circular cross-section. The outer sleeve 52 may have an elliptical cross-section. Preferably, the outer sleeve 52 may have a similarly in cross-section to the inner sleeve 53, thereby the width of the annular gap G is constant around its circumference.

Inside the outer sleeve 52, the inner sleeve 53 is arranged so as to define the annular gap G for receiving the cell nozzle 22 therein. The outer sleeve 52 and the inner sleeve 53 form a seal S below the annular gap G but upper the tube body 51, viewed in the longitudinal direction of the connecting tube 50. The seal S is formed by an inextricable bond of the outer sleeve 52 to the inner sleeve 53. The seal S may be formed by portions 55, 57 of the outer and inner sleeves 52, 53 being joined in a plastic welded connection. The welded portions 55, 57 may be joined by heat joining. For example, after inserting the inner sleeve 53 into the cavity of the outer sleeve 52, heat may be applied where the seal S is to be formed to cause the joining of the outer and inner sleeves 52, 53 within the portions 55, 57. Additionally or alternatively, the outer sleeve 52 and inner sleeve 53 may be joined to each other via one or more adhesives.

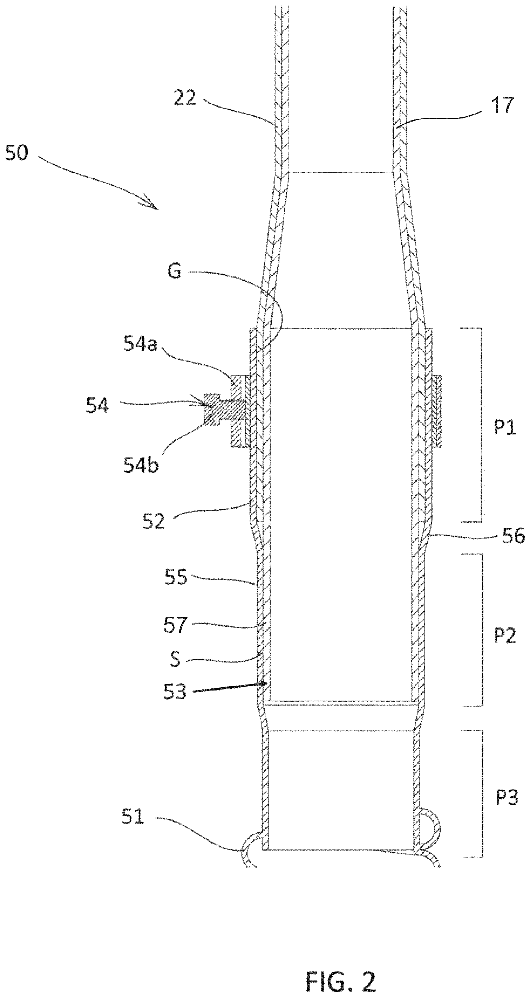

As seen in Figure 2, the outer sleeve 52 may have a first portion P1 and a second portion P2 having a smaller diameter than the first portion P1. The outer sleeve 52 may further have a third portion P3 having a smaller diameter than the second portion P2. At the first portion P1, the outer sleeve 52 defines the annular gap G with the inner sleeve 53. The width of the annular gap G may be the same as or slightly smaller than the wall thickness of the cell nozzle 22, thereby a sealing function may also be expected between the sleeves 52, 53 and the cell nozzle 22, even without the clamping force from the clamping means 54. At the second portion P2, the seal S described above is formed. A tapered transition 56 may be provided between the first and second portions P1, P2. This relieves stress in the transition when applying a clamping force to the outer sleeve with the clamping means 54. The third portion P3 may have an inner diameter that is the same as the inner diameter of the tube body 51 as well as the inner diameter of the inner sleeve 53. This can reduce the flow resistance at the end of the connecting tube 51.

It is preferable that the outer sleeve 52 and the tube body 51 are formed as a single piece. Such a unitary part may be manufactured at low cost without causing any fluid leakage problems.

The inner sleeve 53 may protrude from the end of the outer sleeve 52 in a direction away from the tube body 51. This allows the inner sleeve 53 to be inserted to a sufficient depth within the cell nozzle 22.

The inner sleeve 53 may be tubular. The inner sleeve 53 may have a circular cross-section. The inner sleeve 53 may have an elliptical cross-section. Preferably, the inner sleeve 53 may have a cross-sectional shape similar to that of the cell nozzle 22.

The inner sleeve 53 may be made of a plastic material. Particularly preferably, the inner sleeve 53 may be made of polytetrafluoroethylene (PTFE). The inner sleeve 53 may be more rigid than the outer sleeve 52. If the inner and outer sleeves 53, 52 are made from the same material, this may e.g. be due to the smaller diameter and/or a larger wall thickness of the inner sleeve 53. This prevents the inner sleeve 53 from excessively being deformed under the clamping force when the clamping means 54 applies a clamping force against the outer sleeve 52, resulting in a proper clamping force being applied on the cell nozzle 22 within the annular gap G. In general, the inner sleeve 53 could also be made of metal. The inner sleeve 53 may be made of fibre-reinforced plastic.

The clamping means 54 is arranged around the outer sleeve 52 so as to apply a clamping force thereto. The clamping means 54 may be configured to apply a circumferential clamping force against the outer sleeve 52. The clamping means 54 may be a screw clamp 54, which comprises a band 54a extending around the outer sleeve 52, and a screw 54b configured to tighten the band 54a.

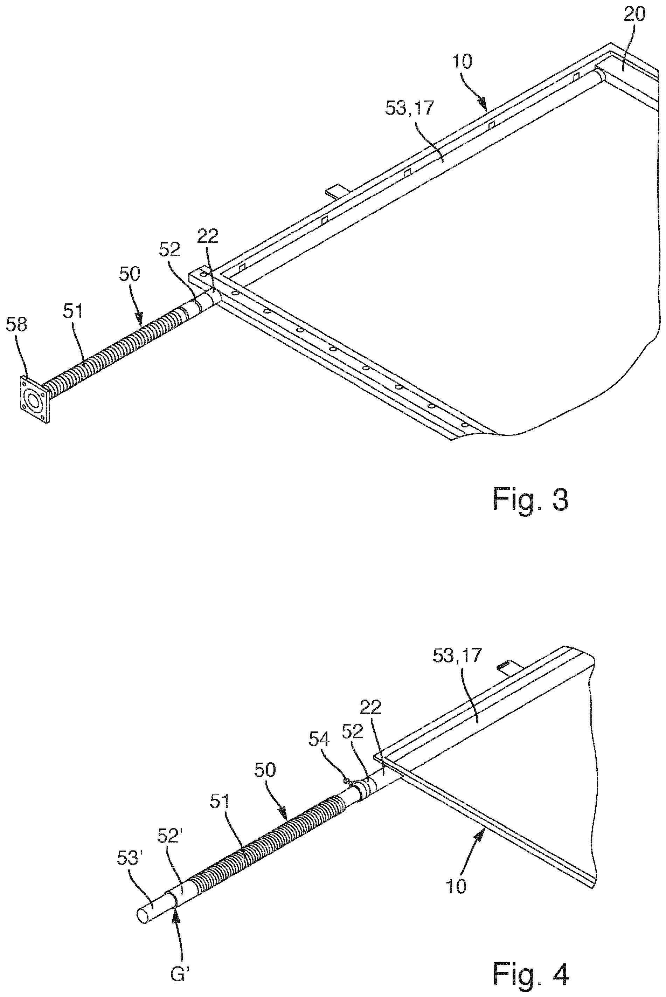

Referring to Figure 3, it can be seen that the connecting tube 50 of the present invention is connected to the cell nozzle 22 of the electrolysis cell 10. The clamping means 54 is not shown for the sake of simplicity. The other or second end of the connecting tube 50, which is to be connected to the outlet header, still has a flange 58.

Figure 4 shows an electrolysis cell 10, which is connected to a connecting tube 50 according to a second embodiment of the present invention. In contrast to the first embodiment shown in Figures 1 and 3 there is no flange 58 at the end of the connecting tube 50 to be connected to the outlet header 23. Instead, the second end of the connecting tube (to be connected to the header 23) has a similar structure as the first end (to be connected to the electrolysis cell 10) shown in Figure 2. In this case, a header nozzle mounted around an opening of the header is to be inserted into a second annular gap G' between a second outer sleeve 52' and a second inner sleeve 53', and thereafter a second clamping means is applied around the second outer sleeve 52'. The second inner sleeve 53' preferably extends some way into the header and prevents liquid electrolyte from being present at the mating surface between second outer sleeve 52 and header nozzle. Further, cost reduction during assembly and maintenance may be expected.

The present invention is also directed to an electrolysis system comprising an electrolysis device as described above, a header as described above, and a connecting tube as described above. The electrolysis device may be a chlor-alkali electrolysis device, an alkaline water electrolysis device or the like.

Furthermore, the present invention is directed to a method for connecting a cell nozzle communicated with a chamber of an electrolysis device to a header. The electrolysis device may be a chlor-alkali electrolysis device, an alkaline water electrolysis device or the like. The method includes providing a connecting tube 50 according to the present invention and as discussed above, inserting the cell nozzle 22 into the annular gap G defined between the outer and inner sleeves 52, 53 of the connecting tube 50, and applying a clamping force to the outer sleeve 52 using the clamping means 54.

### List of reference signs

- 10: electrolysis cell
- 11: half-shell or chamber
- 12: half-shell or chamber
- 13: membrane
- 14: screws
- 15: inlet distributor tube
- 16: inlet distributor tube
- 17: discharge pipe
- 17a: flange
- 18: baffle plate
- 19: rim portion
- 20, 21: outlet channel
- 22: cell nozzle
- 23: outlet header
- 24: outlet hose
- 24a, 24b: flanges
- 25: flange connection
- 50: connecting tube
- 51: tube body
- 52, 52': outer sleeve
- 53, 53': inner sleeve
- 54: clamping means
- 54a: band
- 54b: screw
- 55, 57: plastic welded portions
- 56: tapered transition
- 58: flange
- G, G': annular gap
- S: seal
- P1, P2, P3: portions of outer sleeve

## Claims

1. A connecting tube (50) for connecting a cell nozzle (22) being in fluid communication with a chamber (11, 12) of an electrolysis cell (10), to an outlet header 23, comprising:
a tube body (51);
an outer sleeve (52) connected to a first end of the tube body (51);
an inner sleeve (53) arranged inside the outer sleeve (52) so as to define an annular gap (G) between the inner sleeve (53) and the outer sleeve (52) for receiving the cell nozzle (22); and
a seal (S) subsisting between the outer and inner sleeves (52, 53) and located between the tube body (51) end and the annular gap (G),
wherein the seal (S) is formed by an inextricable bond of the outer sleeve (52) to the inner sleeve (53),
wherein the outer sleeve (52) is made of flexible plastic material such as to be deformable to fit it onto the cell nozzle (22) and to ensure that a clamping force of a clamping means is transmittable to the cell nozzle arranged inside the annular gap.

2. The connecting tube (50) according to claim 1, wherein the outer sleeve (52) is made of polytetrafluoroethylene (PTFE).

3. The connecting tube (50) according to any one of claims 1 to 2,
wherein the seal (S) is formed by portions (55, 57) of the outer and inner sleeves (52, 53) joined by a plastic welded connection.

4. The connecting tube (50) according to any one of claims 1 to 3,
wherein a first portion (P1) of the outer sleeve (52) that defines the annular gap (G) is larger in diameter than a second portion (P2) of the outer sleeve (52) that is fixed to the inner sleeve (53).

5. The connecting tube (50) according to claim 4, wherein the outer sleeve (52) has a tapered transition (56) between the first and second portions (P1, P2).

6. The connecting tube (50) according to any one of claims 1 to 5, wherein the inner sleeve (53) protrudes from the outer sleeve (52) in a direction away from the tube body (51).

7. The connecting tube (50) according to any one of claims 1 to 6, wherein the inner sleeve (53) is made of a plastic material.

8. The connecting tube (50) according to claim 7, wherein the inner sleeve (53) is made of polytetrafluoroethylene (PTFE)

9. The connecting tube (50) according to any one of claims 1 to 8, wherein the tube body (51) is a flexible tube.

10. The connecting tube (50) according to any one of claims 1 to 9, wherein the tube body (51) is a corrugated hose.

11. The connecting tube (50) according to any one of claims 1 to 10,
wherein the outer sleeve (52) and the tube body (51) are formed as a single piece.

12. An electrolysis system for electrolytic treatment of liquids, comprising:
an electrolysis cell (10) having an anode chamber (12), a cathode chamber (11), and an ion exchange membrane (13) separating the anode chamber (12) from the cathode chamber (11), cell nozzles (22) being assigned to the respective chambers (11, 12); one or more headers (23); and
a connecting tube (50) according to any one of claims 1 to 11, which connects one of the cell nozzles (22) to one of the headers (23) with the cell nozzle (22) being inserted into the annular gap (G) defined between the outer and inner sleeves (52, 53) of the connecting tube (50), wherein a clamping force is applied to the outer sleeve (52) by a clamping means (54) in order to clamp the outer sleeve (52) to the cell nozzle (22).

13. The electrolysis system according to claim 12, wherein the clamping means (54) includes a screw clamp, which comprises a band (54a) extending around the outer sleeve (52), and a screw (54b) configured to tighten the band (54a).

14. A method for connecting a cell nozzle (22) communicated with a chamber (11, 12) of an electrolysis device (10) to a header, comprising:
providing a connecting tube (50) according to any one of claims 1 to 11;
inserting the cell nozzle (22) into the annular gap (G) defined between the outer and inner sleeves (52, 53) of the connecting tube (50); and
applying a clamping force to the outer sleeve (52) using a clamping means (54).

## Patentansprüche

1. Verbindungsrohr (50) zum Verbinden eines Zellenstutzens (22), der in Fluidverbindung mit einer Kammer (11, 12) einer Elektrolysezelle (10) steht, mit einem Austrittssammler (23), umfassend:
einen Rohrkörper (51);
eine mit einem ersten Ende des Rohrkörpers (51) verbundene
Außenhülse (52);
eine innere Hülse (53), die innerhalb der äußeren Hülse (52) angeordnet ist, so dass zwischen der inneren Hülse (53) und der äußeren Hülse (52) ein ringförmiger Spalt (G) zur Aufnahme des Zellenstutzens (22) gebildet ist; und
eine Dichtung (S), die zwischen der Außen- und der Innenhülse (52, 53) besteht und zwischen dem Ende des Rohrkörpers (51) und dem ringförmigen Spalt (G) angeordnet ist,
wobei die Dichtung (S) durch eine untrennbare Verbindung der Außenhülse (52) mit der Innenhülse (53) gebildet ist,
wobei die Außenhülse (52) aus einem flexiblen Kunststoffmaterial besteht, so dass sie verformbar ist, um sie auf den Zellenstutzen (22) aufzuschieben und sicherzustellen, dass eine Klemmkraft einer Klemmvorrichtung auf den innerhalb des ringförmigen Spaltes angeordneten Zellenstutzen übertragbar ist.

2. Verbindungsrohr (50) nach Anspruch 1, wobei die Außenhülse (52) aus Polytetrafluorethylen (PTFE) gefertigt ist.

3. Verbindungsrohr (50) nach einem der Ansprüche 1 bis 2, wobei die Dichtung (S) durch Abschnitte (55, 57) der Außen- und Innenhülsen (52, 53) gebildet ist, die durch eine Kunststoffschweißverbindung miteinander verbunden sind.

4. Verbindungsrohr (50) nach einem der Ansprüche 1 bis 3, wobei ein erster Abschnitt (P1) der Außenhülse (52), der den ringförmigen Spalt (G) begrenzt, einen größeren Durchmesser aufweist als ein zweiter Abschnitt (P2) der Außenhülse (52), der an der Innenhülse (53) befestigt ist.

5. Verbindungsrohr (50) nach Anspruch 4, wobei die Außenhülse (52) einen konischen Übergang (56) zwischen dem ersten und dem zweiten Abschnitt (P1, P2) aufweist.

6. Verbindungsrohr (50) nach einem der Ansprüche 1 bis 5, wobei die innere Hülse (53) aus der äußeren Hülse (52) in einer Richtung weg vom Rohrkörper (51) herausragt.

7. Verbindungsrohr (50) nach einem der Ansprüche 1 bis 6, wobei die innere Hülse (53) aus einem Kunststoffmaterial besteht.

8. Verbindungsrohr (50) nach Anspruch 7, wobei die innere Hülse (53) aus Polytetrafluorethylen (PTFE) besteht.

9. Verbindungsrohr (50) nach einem der Ansprüche 1 bis 8, wobei der Rohrkörper (51) ein flexibles Rohr ist.

10. Verbindungsrohr (50) nach einem der Ansprüche 1 bis 9, wobei der Rohrkörper (51) ein Wellschlauch ist.

11. Verbindungsrohr (50) nach einem der Ansprüche 1 bis 10, wobei die Außenhülse (52) und der Rohrkörper (51) einstückig ausgebildet sind.

12. Elektrolyseanlage zur elektrolytischen Behandlung von Flüssigkeiten, umfassend:
eine Elektrolysezelle (10) mit einer Anodenkammer (12), einer Kathodenkammer (11) und einer Ionenaustauschmembran (13), die die Anodenkammer (12) von der Kathodenkammer (11) trennt, wobei den jeweiligen Kammern (11, 12) Zellenstutzen (22) zugeordnet sind;
einem oder mehreren Sammlern (23); und
ein Verbindungsrohr (50) gemäß einem der Ansprüche 1 bis 11, das einer der Zellenstutzen (22) mit einem der Sammler (23) verbindet, wobei der Zellenstutzen (22) in den ringförmigen Spalt (G) zwischen der Außenhülse und der Innenhülse (52, 53) des Verbindungsrohrs (50) eingesetzt ist, wobei durch eine Klemmvorrichtung (54) eine Klemmkraft auf die äußere Hülse (52) ausgeübt wird, um die äußere Hülse (52) an dem Zellenstutzen (22) festzuklemmen.

13. Elektrolysesystem nach Anspruch 12, wobei die Klemmvorrichtung (54) eine Schraubklemme umfasst, die ein sich um die Außenhülse (52) erstreckendes Band (54a) und eine Schraube (54b) umfasst, die zum Festziehen des Bandes (54a) ausgebildet ist.

14. Verfahren zum Verbinden eines Zellenstutzens (22), die mit einer Kammer (11, 12) einer Elektrolysevorrichtung (10) in Verbindung steht, mit einem Sammler, umfassend:
Bereitstellen eines Verbindungsrohrs (50) gemäß einem der Ansprüche 1 bis 11;
Einführen des Zellenstutzens (22) in den ringförmigen Spalt (G), der zwischen der äußeren und der inneren Hülse (52, 53) des Verbindungsrohrs (50) definiert ist; und
Aufbringen einer Klemmkraft auf die Außenhülse (52) unter Verwendung einer Klemmvorrichtung (54).

## Revendications

1. Tube de raccordement (50) destiné à raccorder un raccord de cellule (22) en communication fluidique avec une chambre (11, 12) d'une cellule d'électrolyse (10) à un collecteur de sortie (23), comprenant :
un corps tubulaire (51) ;
un manchon extérieur (52) relié à une première extrémité du corps tubulaire (51) ;
un manchon intérieur (53) disposé à l'intérieur du manchon extérieur (52) de manière à définir un espace annulaire (G) entre le manchon intérieur (53) et le manchon extérieur (52) pour recevoir le raccord de cellule (22) ; et
un joint (S) présent entre les manchons extérieur et intérieur (52, 53) et situé entre l'extrémité du corps tubulaire (51) et l'espace annulaire (G),
dans lequel le joint (S) est formé par une liaison permanente entre le manchon extérieur (52) et le manchon intérieur (53),
dans lequel le manchon extérieur (52) est réalisé en une matière plastique souple de manière à pouvoir être déformé pour s'adapter au raccord de cellule (22) et à garantir qu'une force de serrage d'un moyen de serrage peut être transmise au raccord de cellule disposée à l'intérieur de l'espace annulaire.

2. Le tube de raccordement (50) selon la revendication 1, dans lequel le manchon extérieur (52) est en polytétrafluoroéthylène (PTFE).

3. Le tube de raccordement (50) selon l'une quelconque des revendications 1 à 2, dans lequel le joint (S) est formé par des parties (55, 57) des manchons extérieur et intérieur (52, 53) reliées par une liaison soudée par plastique.

4. Le tube de raccordement (50) selon l'une quelconque des revendications 1 à 3, dans lequel une première partie (P1) du manchon extérieur (52) qui définit l'espace annulaire (G) a un diamètre plus grand qu'une deuxième partie (P2) du manchon extérieur (52) qui est fixée au manchon intérieur (53).

5. Le tube de raccordement (50) selon la revendication 4, dans lequel le manchon extérieur (52) présente une transition effilée (56) entre les première et deuxième parties (P1, P2)

6. Le tube de raccordement (50) selon l'une quelconque des revendications 1 à 5, dans lequel le manchon intérieur (53) fait saillie à partir du manchon extérieur (52) dans une direction s'éloignant du corps tubulaire (51).

7. Le tube de raccordement (50) selon l'une quelconque des revendications 1 à 6, dans lequel le manchon intérieur (53) est réalisé en une matière plastique.

8. Le tube de raccordement (50) selon la revendication 7, dans lequel le manchon intérieur (53) est en polytétrafluoroéthylène (PTFE).

9. Le tube de raccordement (50) selon l'une quelconque des revendications 1 à 8, dans lequel le corps tubulaire (51) est un tube flexible.

10. Le tube de raccordement (50) selon l'une quelconque des revendications 1 à 9, dans lequel le corps tubulaire (51) est un tuyau ondulé.

11. Le tube de raccordement (50) selon l'une quelconque des revendications 1 à 10, dans lequel le manchon extérieur (52) et le corps tubulaire (51) sont formés d'une seule pièce.

12. Système d'électrolyse pour le traitement électrolytique de liquides, comprenant :
une cellule d'électrolyse (10) comportant une chambre anodique (12), une chambre cathodique (11) et une membrane échangeuse d'ions (13) séparant la chambre anodique (12) de la chambre cathodique (11), des raccords de cellule (22) étant associées aux chambres respectives (11, 12) ;
un tube de raccordement (50) selon l'une quelconque des revendications 1 à 11, qui relie l'un des raccords de cellule (22) à l'un des collecteurs (23), le raccord de cellule (22) étant inséré dans l'espace annulaire (G) défini entre les manchons extérieur et intérieur (52, 53) du tube de raccordement (50), dans lequel une force de serrage est appliquée au manchon extérieur (52) par un moyen de serrage (54) afin de serrer le manchon extérieur (52) contre le raccord de cellule (22).

13. Système d'électrolyse selon la revendication 12, dans lequel le moyen de serrage (54) comprend une pince à vis qui comprend une bande (54a) s'étendant autour du manchon extérieur (52) et une vis (54b) configurée pour serrer la bande (54a).

14. Procédé pour raccorder un raccord de cellule (22) communiquant avec une chambre (11, 12) d'un dispositif d'électrolyse (10) à un collecteur, comprenant :
fournir un tube de raccordement (50) selon l'une quelconque des revendications 1 à 11;
insérer le raccord de cellule (22) dans l'espace annulaire (G) défini entre les manchons extérieur et intérieur (52, 53) du tube de raccordement (50) ; et
appliquer une force de serrage sur le manchon extérieur (52) à l'aide d'un moyen de serrage (54).
